(19) Europäisches Patentamt / European Patent Office / Office européen des brevets

(11) **EP 1 982 480 B1**

(12) **FASCICULE DE BREVET EUROPEEN**

(45) Date de publication et mention
de la délivrance du brevet:
**25.03.2020 Bulletin 2020/13**

(21) Numéro de dépôt: **07712159.8**

(22) Date de dépôt: **06.02.2007**

(51) Int Cl.:
*H04W 16/04* *(2009.01)*    *H04W 28/16* *(2009.01)*
*H04W 72/04* *(2009.01)*

(86) Numéro de dépôt international:
**PCT/EP2007/051131**

(87) Numéro de publication internationale:
**WO 2007/090839 (16.08.2007 Gazette 2007/33)**

(54) **PROCÉDÉ D'ALLOCATION DYNAMIQUE DE RESSOURCES DANS UN RÉSEAU DE GROUPE DE STATIONS**

VERFAHREN ZUR DYNAMISCHEN ZUTEILUNG DER RESSOURCEN IN EINER NETZGRUPPE

METHOD FOR DYNAMICALLY ALLOCATING RESOURCES IN A NETWORK OF STATION CLUSTERS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.02.2006 FR 0601078**

(43) Date de publication de la demande:
**22.10.2008 Bulletin 2008/43**

(73) Titulaire: **Thales**
**92400 Courbevoie (FR)**

(72) Inventeurs:
• **BIETH, Marc**
  **94117 Arcueil Cedex (FR)**
• **THILL, Jean-Claude**
  **92260 Fontenay Aux Roses (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
• J. GRONKVIST: "assigment methods for spatial reuse TDMA" SWEDISH DEFENCE RESEARCH ESTABLISHMENT DIV. OF COMMAND AND CONTROL WARFARE TECH.. IEEE, 2000, pages 119-124, XP002436771
• TAO WU, SUBIR BISWAS: "A self reorganizing slot allocation protocol for multi cluster sensor networks" IEEE, 2005, XP002404232
• "An overlapping communication protocol using Improved time slot leasing for bluetooth WPANs" DEPARMENT OF COMPUTER SCIENCE AND INFORMATION ENGINEERING, NATIONAL CHUNG CHENG UNIVERSITY, TAIWAN, 2005, pages 1-10, XP002436695
• "A locally coordinated Scaternet Scheduling Algorithm" PROCEEDINGS OF THE 27TH ANNUAL IEEE CONFERENCE ON LOCAL COMPUTER NETWORKS, 2002, pages 1-11, XP002436696

**EP 1 982 480 B1**

**Description**

La présente invention concerne notamment un procédé et un système d'allocation dynamique de ressources temps fréquence dans un réseau radio et aussi dans des réseaux ad-hoc.

Elle peut s'appliquer dans des systèmes à accès multiple spatial et temporel de type STDMA (Spatial Time Division Multiple Access).

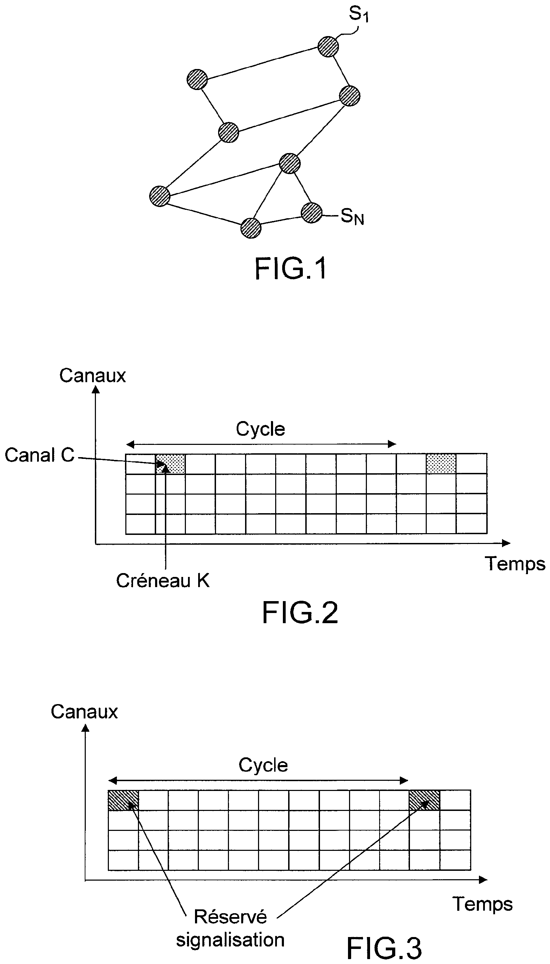

La figure 1 représente un ensemble de stations Si interconnectées par un réseau radio où les ressources sont organisées en créneaux temps/fréquence comme représenté à la figure 2. Sur un créneau temporel donné et une fréquence donnée, certaines des stations vont transmettre vers certaines de leurs voisines destinatrices. Pour un cycle donné, on alloue un canal logique C pour un créneau temporel K.

Le problème posé est d'allouer de façon distribuée, les créneaux et les fréquences à des stations émettrices (et à un sous ensemble de leurs voisines dit destinatrices) en utilisant au mieux les ressources disponibles, c'est-à-dire en permettant à un maximum d'émetteurs d'utiliser un même créneau tout en respectant les règles suivantes :

- Une station est soit émettrice, soit réceptrice,

- Si la station est émettrice, alors les destinataires sont récepteurs sur le créneau et la fréquence de l'émetteur, et une station ne peut être réceptrice que pour un seul canal et un seul émetteur,

- Si une station est réceptrice d'un émetteur sur un canal, il n'y a pas d'autres stations voisines de cette station, qui soit émettrice sur le même canal, autre que l'émetteur écouté.

Il est également connu d'utiliser une orthogonalisation des transmissions sur un créneau en utilisant d'autres types de transmission que la transmission sur une fréquence donnée, par exemple, des sauts de fréquences orthogonalisées, des codes CDMA (Code Division Multiple Access).

L'organisation en créneaux des transmissions demande une fonction de synchronisation que l'on suppose exister, par exemple, le système GPS ou tout autre système de distribution horaire.

Différentes solutions sont actuellement proposées pour le problème d'allocation dans la littérature ou dans des systèmes existants.

La situation à allocation la plus classique est celle où l'attribution des allocations temps-fréquence est faite par une station centrale; la topologie du réseau n'est pas nécessairement en étoile. Cette station centrale gère les attributions, au travers des demandes et des priorités des caractéristiques des stations.

Cette solution est adoptée (partiellement ou totalement) par une majorité des protocoles civils utilisant des accès de type à accès multiple temporel ou TDMA (abrégé anglo-saxon de time division multiple access 802.16, 802.11 en mode dirigé ...). Pour des raisons de réactivité et de robustesse, elle ne peut être envisagée pour des réseaux multibonds d'étendue un peu importante.

Dans les familles de solutions pour réseau Ad Hoc, on trouve différentes méthodes pouvant s'adapter plus ou moins à la topologie et au besoin en trafic.

Les systèmes les plus simples ont une allocation de premier niveau prédéfinie et attribuée à des groupes de stations en fonction des caractéristiques prévisibles de besoin et de déploiement. Une fois cette allocation attribuée, il existe des règles pour utiliser cette allocation dans le groupe, règles qui peuvent accepter les collisions ou disposer de signalisation pour régler les conflits.

Pour résoudre les situations dans les réseaux à nombre de bonds important, de nombreuses solutions décentralisées ont été proposées, dont certaines seulement sont mentionnées ci-après.

Une première famille organise la transmission en une phase de réservation, qui peut être à contention, suivi d'une phase de transmission. Le cycle réservation transmission se répète, cycliquement.

Une autre famille de solutions, consiste à échanger de la signalisation sur une ressource particulière dite canal de signalisation pré alloué ou allouée dynamiquement. Cette signalisation permet de connaître les ressources utilisées par une station et donc, de détecter les conflits, de vérifier si une ressource est allouable, sans souvent indiquer comment arbitrer ces conflits ni comment attribuer les allocations (sauf partiellement ou dans le cadre d'une pré-allocation).

Une autre famille de solutions permet de garantir, l'absence de conflit sans pour autant déterminer une allocation aux stations. Elle est basée sur une signalisation qui permet à une station d'identifier, quelles stations sont en conflit (ceci dépendant du type de transmissions envisagé, point à point (une station vers une voisine ou link activation), diffusion ou « broadcast » (une station vers toutes ses voisines ou node activation). Le document TAO WU, SUBIR BISWAS: "A self reorganizing slot allocation protocol for multi cluster sensor networks", IEEE, 2005

présente un mécanisme Self-Reorganizing Slot Allocation pour le contrôle d'accès au support (MAC) basé sur TDMA dans les réseaux de capteurs sans fil. Avec la TDMA, un nœud peut réaliser des économies d'énergie importantes en restant actif uniquement pendant les créneaux horaires alloués aux transmissions et aux réceptions. Un procédé pseudo aléatoire permet alors, pour un créneau donné à une station, de savoir si elle gagne le droit d'utiliser le créneau vis-à-vis des stations en compétition. La procédure garantit l'absence de conflit, mais ne donne pas aux stations une connaissance déterministe des créneaux qu'elle peut utiliser. De plus, en un sens elle est sous optimale, certains créneaux pouvant ne pas être utilisés, du fait du caractère multibonds du réseau et de contraintes différentes entre stations. Cette procédure est utilisée dans la norme 802.16 et dans les protocoles HAMA, LAMA NAMA de Lichun Bao et J.J. Garcia-Luna-Aceves décrits dans les publications « Channel Access Scheduling for Ad-Hoc Networks" Journal of Parallel and Distributed Computing, Special Issue on Wireless and Mobile Ad Hoc Networking and Computing, 2002 » et « Distributed Channel Access Scheduling for Ad Hoc Networks » ou encore dans la demande de brevet US 2002/0167960.

Une autre famille de solutions opère sur une structure préalable du réseau en deux niveaux. Par exemple, il existe une procédure distribuée pour structurer le réseau en groupe ou « clusters ». Ces clusters reçoivent une allocation famille (de créneaux) et cette allocation est gérée dynamiquement dans ce cluster (on est ramené à une gestion de type station centrale) et se ramène à une allocation centralisée. Pour l'allocation des clusters on utilise des règles générales, par exemple, attribuer une fréquence (un canal, un code CDMA) à un « cluster » de façon à ce que des « clusters » interférents aient des fréquences différentes. (Par exemple M Gerla and C.R Lin In IEEE Commun. Sept 97 «Adaptative clustering for mobile Wireless networks»). Une telle solution a cependant quelques limites. D'abord, il faut préstructurer les allocations en groupes indépendants pour pouvoir allouer les « clusters » (ici un groupe est l'ensemble des allocations sur une fréquence, mais lorsqu'il y a peu de fréquences, il faut utiliser le partage temporel). Or le nombre de groupes nécessaires dépend de la topologie. Il y a là une difficulté. De plus, les besoins entre les « clusters » ne sont pas forcément équivalents. La pré-allocation par groupe peut conduire à des insuffisances dans un groupe, et un manque dans d'autres. Enfin, en cas de modification de la « clusterisation », c'est l'ensemble des allocations qui sont impactées, et demande alors une réallocation.

La dernière famille d'allocation citée, est l'allocation SDTMA de J. Grönkvist « Distributed STDMA in Ad hoc network » et « Interference-Based Scheduling in Spatial Reuse TDMA » J. Grönkvist Doctoral Thesis Stockholm, Sweden 2005. Dans cette thèse, l'auteur décrit une méthode décentralisée pour allouer des nœuds ou des liens, par négociation et arbitrage des conflits entre les stations. L'arbitrage tient compte du trafic par une fonction de priorité. Par ailleurs, les conditions de brouillage entre émetteurs et récepteurs visent à prendre en compte un modèle d'interférence plus détaillé le voisinage simple utilisé dans l'invention décrite ci-après, le modèle étant connu de l'Homme du métier.

L'invention concerne un procédé distribué pour attribuer de manière dynamique à des groupes de stations comprenant au moins deux stations désignées « interfaces », lesdites stations comportant un émetteur/récepteur et communiquant entre elles grâce à des capacités de signalisation, des ressources temps/fréquence organisées en classes disjointes, une classe comportant C allocations, chaque groupe de stations comprenant une table d'allocation $T_{si}$, chaque groupe de stations échange au moyen d'un protocole de signalisation cette table d'allocation avec les groupes qui sont définis comme étant en conflit avec lui par un graphe de contraintes, un graphe de contrainte entre les groupes de stations indiquant pour un groupe A donné les groupes de stations qui ne peuvent avoir des allocations comprises dans une même classe que les allocations de A (conflit de première espèce entre groupes) et les groupes de stations qui ne sont pas en conflit de première espèce avec ledit groupe A mais qui, s'ils utilisent des allocations différentes comprises dans une même classe que la classe du groupe A, doivent utiliser dans cette classe des allocations différentes des allocations utilisées par ledit groupe A (conflit de seconde espèce entre groupes), le procédé utilisant une fonction d'arbitrage pour régler les conflits et les attributions des allocations entre les groupes en conflit selon le graphe de contrainte, et est caractérisé en ce qu'il comporte au moins les étapes suivantes :

- chaque interface $J_i$ émet vers les interfaces K indiquées en conflit dans le graphe de contrainte, le tableau d'allocations $TJ_i$ qui lui est associé,

- une interface $J_i$ regarde pour chaque allocation $AJ_i$ qu'elle a inscrite dans son tableau $TJ_i$ si l'allocation $AJ_i$ est utilisée dans la table reçue d'une interface K qui est en conflit,

- l'interface $J_i$ utilise la fonction d'arbitrage pour modifier l'allocation $AJ_i$ dans le tableau $TJ_i$, et en ce que :

- si une allocation est utilisée selon les tables d'allocation par une interface K et une interface J, et si J constate que l'interface K est gagnante selon la fonction d'arbitrage, en supprimant dans les deux tables l'allocation, et si le conflit est de première espèce, alors J supprime, par exemple, l'allocation $A_{ji}$ dans le tableau d'allocations de l'interface J,

- si une allocation est utilisée selon les tables d'allocation par une interface K et une interface J, et si J constate que l'interface K est gagnante selon la fonction d'arbitrage en supprimant dans les deux tables l'allocation et si le conflit est de seconde espèce, alors on conserve l'allocation temporelle $AJ_i$ dans le tableau $TJ_i$ et l'on change de canal de transmission, s'il existe un canal ou cette allocation est sans conflit de seconde espèce.

L'interface J examine, par exemple, s'il existe des allocations libres $A_i$ non annoncées par les interfaces en conflit et elle s'attribue ses allocations.

Si une interface J détermine une allocation $A_n$ qu'elle n'utilise pas et que J évalue selon la fonction d'arbitrage qu'elle est gagnante vis-à-vis de toute interface en conflit utilisant cette allocation (en ajoutant l'interface dans sa table et en la supprimant dans les tables des interfaces en conflit), l' interface gagnante ou l'interface à égalité par la fonction d'arbitrage vis-à-vis de toutes les autres interfaces en conflit possédant cette allocation s'attribue l'allocation An.

On peut utiliser une famille d'allocations comprenant les étapes suivantes si l'interface J s'attribue, récupère ou supprime une allocation, elle cherche avant d'examiner d'autres allocations à s'attribuer, à récupérer, ou à supprimer les allocations K+n*DNSj où NDSj est un paramètre de l'interface J, K est une allocation récupérée par l'interface J.

On utilise, par exemple, une fonction d'arbitrage définie de la manière suivante : une interface étant caractérisée par une demande de type C1j, C2j, Cmj, où Cmj représente un nombre d'allocation demandée par l'interface J avec la priorité m (les priorités les plus fortes étant d'indice le plus faible),on pose $SL, j = \sum_{i=1}^{i=L} Ci,$ j et Lmax la plus petite des priorités considérées, avec L l'indice correspondant à la priorité
et J gagne sur K, NJ étant le nombre d'allocations de J et NK le nombre d'allocations de K si :

- Soit on a (Sl,j<NJ<=Sl+1 ,j et Sh,k< NK<= Sh+1,k) et k >l ou NK > Slmax,k

- Soit on a (Sl,j<NJ<=Sl+1 ,j et Sl,k <NK<= Sl+1,k) ou (NK > Slmax,k et NJ > Slmax,j) et (NJ-Sl,j)/Cl+1,j <(NK-Sl,k)/Cl+1,k .

Si (NJ-Sl,j)/Cl+1,j =(NK-Sl,k)/Cl+1,k il y a égalité.

Le groupe de stations peut former un ensemble radio électriquement connexe et le graphe de contrainte est déterminé par le voisinage radio électrique des stations de chaque groupe et des caractéristiques de transmission potentielle associés aux stations des groupes.

Le procédé selon l'invention présente notamment les avantages suivants :

- L'allocation est stable, c'est-à-dire en absence de modification de la topologie du réseau et du besoin, elle converge vers une solution stable et ceci, rapidement, et est capable de détecter les modifications des allocations,

- Elle est capable de gérer les priorités existantes,

- Elle permet d'attribuer des allocations de type temps/fréquences de façon décentralisée, à des groupes de stations,

- Les ressources sont attribuées rapidement, éventuellement en étant en conflit. Ceci permet de maintenir par une technique HAMA, l'utilisation partagée de ces ressources, en tendant progressivement vers une utilisation exclusive. Les interfaces ont donc très rapidement des ressources de communication, éventuellement en conflit, sans attendre un process relativement long tendant à les attribuer sans conflit,

- Le procédé intègre le multicanal et généralise la notion d'allocation à des groupes quasi arbitraires, au-delà de la simple notion d'allocation de liens ou de nœuds.

Le temps ou « overhead » de transmission est limité, et par voie de conséquence, les échanges de signalisations entre stations pour régler les conflits sont limités en volume et localisés dans un voisinage des stations concernées.

La solution proposée permet de disposer d'une allocation dynamique des groupes, et de réaliser ainsi une allocation à deux niveaux. La séparation d'une technique d'allocation en deux niveaux permet d'avoir une réactivité plus grande, l'allocation à l'intérieur d'un groupe pouvant être centralisée et s'appuyer sur des techniques classiques.

Ce procédé peut être avantageusement exploité dans des équipements radio pour constituer des systèmes de communications en réseau qui ne nécessitent pas (cas ad hoc) ou qui minimisent les actions de pré-allocation/configuration pour attribuer les ressources.

D'autres caractéristiques et avantages de la présente invention apparaîtront mieux à la lecture de la description donnée à titre illustratif et nullement limitatif annexé des figures qui représentent pour dire que la description est donnée pour illustrer l'invention, sans la limiter :

- La figure 1 un ensemble de stations interconnectées par un réseau radio ou réseau Ad Hoc,

- La figure 2 un schéma symbolique des ressources temps fréquences,

- La figure 3 un exemple de structure d'un canal de transmission comprenant des créneaux réservés à la transmission et des créneaux allouables aux interfaces,

- La figure 4 un réseau structuré en interfaces dont deux clusters et un lien bi-directif,

- La figure 5 une allocation valide pour le réseau et les interfaces de la figure 4, et

- La figure 6 une fonction d'arbitrage possible pour permettre la convergence du procédé selon l'invention.

Le procédé selon l'invention a notamment pour fonction d'allouer des ressources temps fréquence entre plusieurs stations d'un réseau Ad Hoc mobile, multibonds, de façon décentralisée, en proposant une méthode pour régler les conflits évoqués précédemment de façon distribuée. Par distribuée, on entend le fait, qu'il n'existe pas, en fonctionnement normal, de station prédéfinie chargée de cette allocation, et que les allocations et le règlement des conflits doivent se faire localement. Par ailleurs, les ressources des systèmes considérés sont limitées et il est probable qu'en cas de charge du réseau de nombreuses demandes d'allocations contradictoires sont à arbitrer.

La solution proposée permet l'allocation de ressources temps/fréquence aux stations Si d'un réseau Ad Hoc mobile tel que schématisé à la figure 1.

Le temps est, par exemple, supposé divisé en intervalles, et suppose une synchronisation du réseau par une méthode quelconque de type GPS (an anglosaxon Global Positionning System) ou toute autre méthode, la synchronisation pouvant être aussi assurée par signalisation interne au réseau. Par ailleurs, on dispose de plusieurs fréquences (canaux).

Une station donnée peut émettre ou recevoir sur un de ces créneaux de temps ou de fréquence, mais l'émission et la réception ne peuvent se faire simultanément. Dans sa transmission ou sa réception sur un créneau temporel donné, la station utilise un et un seul canal, ce canal pouvant être une fréquence, une séquence à évasion de fréquence EVF, un code à accès multiple CDMA (Code Division Multiple Access) ou d'autres techniques d'orthogonalisation des transmissions.

Il est supposé que l'émission d'un émetteur hors de portée d'une station A (qualité de liens insuffisante) ne peut être reçue par A, mais de plus, ne peut pas brouiller une réception de cette station A (émission d'un autre émetteur en portée).

Le procédé selon l'invention s'inscrit dans une architecture qui suppose l'existence préalable de différentes fonctions dont une fonction de définition des groupes de stations appelés par la suite interfaces, dont certains exemples sont donnés, à titre non limitatif, dans la suite de la description.

L'un des objectifs du procédé est d'allouer ces interfaces compte tenu des contraintes. Une fois ces interfaces allouées, le procédé peut mettre en œuvre un second niveau d'allocation, dépendant, de la nature de l'interface, par exemple un « cluster » ou un lien non orienté, qui détermine les allocations attribuées à l'interface qui l'utilise. L'allocation interne est connue de l'Homme du métier.

La nature de l'interface à prendre en compte est décrite par la connaissance des stations participant à l'interface, si elles sont toujours émettrices ou toujours réceptrices ou tantôt l'un ou l'autre. La fonction interne d'allocation n'a pas à être prise en compte, ce qui signifie que l'allocation aux groupes devra être valide quelle que soit l'allocation interne faite pour un créneau donné.

Le procédé suppose l'existence d'une capacité de signalisation entre stations voisines, de façon à ce que les allocations d'une interface (groupe de stations) soient connues des interfaces en conflit potentiel (la notion de conflit est explicitée ci-après). La façon d'attribuer des ressources à cette signalisation est supposée préexister et exempte de conflit. Ce peut être une préallocation ou une allocation dynamique d'une partie de la capacité destinée à la signalisation telle que schématisée à la figure 3.

Il est cependant nécessaire de savoir propager la signalisation vers les stations des interfaces concernées. A titre d'illustration mais de façon non exclusive, une méthode est décrite, dans le cas où la signalisation est de type diffusion ou « broadcast », et les interfaces constituées par une station et certaines de ses voisines (voire toutes).

**Notion d'interface et graphe de contraintes**

Une interface dispose d'un mécanisme interne permettant aux stations de communiquer entre elles pourvu qu'un ensemble de créneaux temps/canal ait été attribué à cette interface.

L'un des objectifs de la solution proposée est d'attribuer ces créneaux temps/canal à ces interfaces de façon à ce qu'il y ait absence de contention entre les transmissions d'interfaces différentes.

Bien que l'on puisse appliquer la solution à des interfaces de nature quelconque, l'exemple donné utilise des interfaces ayant une station dite centrale et des stations dites subordonnées, voisines au sens radioélectrique de la station centrale.

Parmi ce type d'interface on trouve, donné à titre nullement limitatif, par exemple :

- Un lien orienté (A vers B), A étant la station centrale,

- Un lien non orienté (A B), la station centrale étant par convention celle de plus grande adresse,

- Une station et une partie de ses voisines, voire la totalité.

Pour caractériser les émissions de l'interface, on définit quelles stations peuvent être émettrices et lesquelles sont réceptrices.

Bien que l'on puisse, a priori, envisager différentes situations, sur un plan pratique, on se limitera à un comportement identique des stations subordonnées. On aura par exemple les deux configurations suivantes :

- Station centrale émettrice, stations subordonnées réceptrices,

- Station centrale émettrice et réceptrice et stations subordonnées émettrices et réceptrices.

Les contraintes sont alors celles du modèle adopté du réseau Ad Hoc :

- Deux interfaces ayant des stations communes ne peuvent recevoir des créneaux temporels identiques quel que soit le canal utilisé. On dira que deux telles interfaces sont en conflit de première espèce.

- Deux interfaces qui ne sont pas en conflit de première espèce et qui ont pour l'une, une station potentiellement émettrice voisine radio électrique d'une station potentiellement réceptrice dans l'autre interface sont dites en conflit de seconde espèce. Dans ce cas elles ne peuvent avoir des créneaux identiques que si elles utilisent des canaux différents sur ces créneaux.

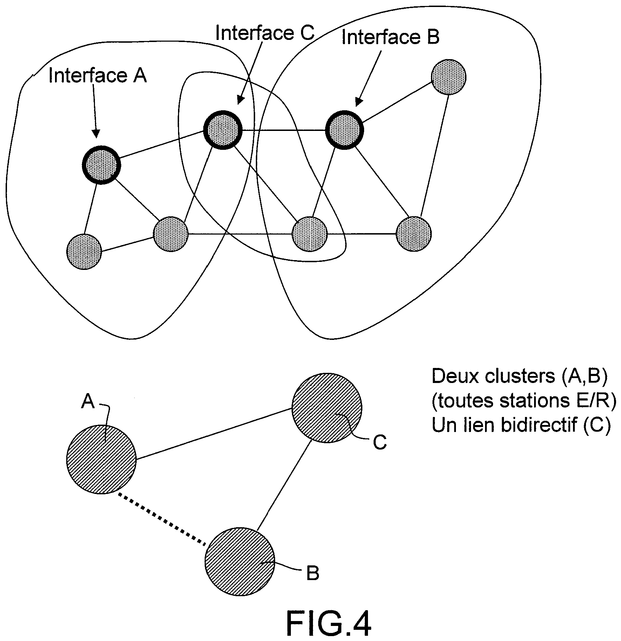

On représente ces contraintes par un graphe tracé à la figure 4 dont les sommets correspondent aux interfaces et, les arêtes en trait plein, correspondent à un conflit de première espèce et les arêtes en pointillé à un conflit de seconde espèce.

Ce graphe est obtenu, par exemple, par la connaissance des stations de l'interface, des caractéristiques de transmission de ces interfaces et du voisinage des stations. Les possibilités d'allocation ne dépendent que de ce graphe et non de la nature des interfaces. Pour obtenir cette connaissance, on peut utiliser le schéma suivant : chaque station annonce à ses voisines sur le canal de signalisation :

- Les interfaces auxquelles elle appartient, chaque interface est annoncée avec son type et la nature de la station annonçant : subordonnée ou centrale,

- Les interfaces auxquelles appartiennent les stations voisines,

- La nature du voisinage de l'interface, c'est-à-dire si une station k a des stations voisines qui annoncent une interface B à laquelle elles appartiennent, (et à laquelle k n'appartient pas), k annonce si elle a un voisinage de type subordonné (une station voisine au moins est subordonnée dans B), centrale (une voisine est station centrale), ou les deux.

Ce premier niveau de signalisation déclaratif, peut être réalisé de différentes façons. Il permet à chaque station centrale de construire le graphe de contrainte. En effet, pour une station centrale donnée, les conflits de première espèce sont déterminés par les annonces des stations subordonnées et des interfaces auxquelles elles participent, et les conflits de seconde espèce par les annonces des interfaces voisines des stations subordonnées.

## Allocation physique et allocation logique. Fonction d'arbitrage

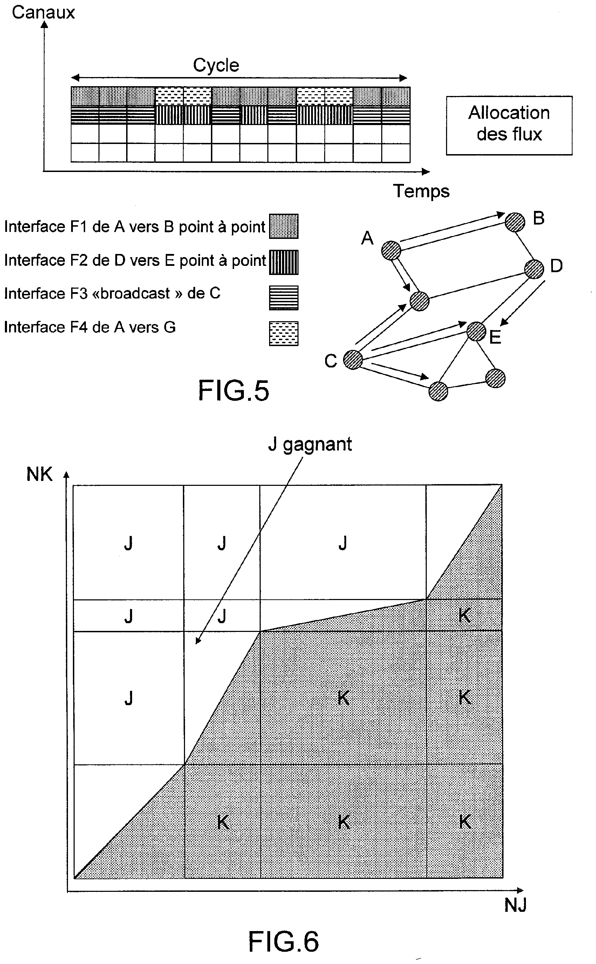

L'un des objectifs du procédé selon l'invention consiste à attribuer de façon décentralisée à chaque interface groupe de stations, des créneaux et des canaux sur ces créneaux, de façon à obtenir une solution sans conflit telle que schématisée à la figure 5. Cette attribution est représentée logiquement comme un tableau de NSLOT colonnes pour un cycle, par C lignes (cf. figure 2). Chaque colonne représente un créneau logique temporel et chaque ligne un canal. Une allocation pour une interface sera représentée par une valeur 1 dans la colonne du créneau et la ligne du canal, et sinon une valeur 0. Ces allocations sont ensuite mises en correspondance avec la totalité ou une partie des créneaux physique (par exemple, on supprime les slots de signalisation dans cette correspondance). Si on change l'organisation de la trame physique, l'attribution reste valable en modifiant la correspondance, sous réserve que chaque station effectue la même opération. La représentation en NSLOT des créneaux suppose que la trame logique se répète tous les NSLOT.

Dans l'exemple donné on suppose que NSLOT et C sont les mêmes pour chaque interface.

Les attributions des créneaux et des canaux sur ces créneaux entre interfaces étant dynamiques, il va arriver dans le processus de définition des interfaces ou par suite des changements de voisinages que des conflits surviennent, c'est à dire que des allocations soient faites et qui ne respectent pas le graphe de contraintes. Il faut donc arbitrer pour décider laquelle des interfaces conserve ou abandonne l'allocation. De même, une attribution étant faite, une nouvelle interface étant créée, elle va devoir vraisemblablement récupérer des allocations sur des interfaces en conflit.

De façon à ce que ces différents mécanismes puissent être mis en jeu et conduisent à une solution stable, une fonction d'arbitrage est introduite. Cette fonction d'arbitrage permet aussi, si nécessaire, de favoriser l'allocation sur certaines interfaces, par exemple, en fonction du besoin de cette interface.

Cette fonction d'arbitrage peut prendre des formes très différentes selon l'objectif que l'on cherche à atteindre. Cependant elle doit respecter les règles suivantes :
La fonction d'arbitrage permet notamment à une interface A de décider si elle gagne, perd ou est à égalité avec une interface B uniquement à partir du nombre d'allocations de l'interface A et du nombre d'allocations de l'interface B. Ceci signifie que les allocations sont indiscernables entre elles.

Si l'interface A gagne par rapport à B et B par rapport à C alors A gagne par rapport à C.

Si A gagne ou est égal par rapport à B, alors A gagne si on augmente le nombre d'allocation de B et ou si on diminue les allocations de A.

Le nombre d'allocations ajoutées ou récupérées est par exemple limité par un paramètre fixé.

A titre d'exemple non limitatif, le procédé utilise la fonction d'arbitrage suivante :
Une interface est caractérisée par une demande de type C1j, C2j, Cmj, où Cmj représente un nombre d'allocation demandée par l'interface J avec la priorité m (les priorités les plus fortes étant d'indice le plus faible). On pose *SL,*

$$j = \sum_{i=1}^{i=L} Ci,$$

*j* et Lmax la plus petite des priorités considérées. La lettre L correspond à la priorité.

On considère à titre d'exemple la fonction d'arbitrage suivante :

J gagne sur K, NJ étant le nombre d'allocations de J et NK le nombre d'allocations de K si :

Soit on a Sl,j<NJ<=Sl+1,j et Sh,k< NK<= Sh+1,k et k >l ou NK > Slmax,k

Soit on a (Sl,j<NJ<=Sl+1,j et Sl,k <NK<= Sl+1,k) ou (NK > Slmax,k et NJ > Slmax,j) et (NJ-Sl,j)/Cl+1,j <(NK-Sl,k)/Cl+1,k.

Si on a (NJ-Sl,j)/Cl+1,j =(NK-Sl,k)/Cl+1,k il y a égalité. Cette fonction d'arbitrage est représentée en figure 6.

On obtient des fonctions d'arbitrage valides par exemple en remplaçant dans tout ou partie des domaines (Sl,j<NJ<=Sl+1,j et Sl,k <NK<= Sl+1,k) ou (NK > Slmax, k et NJ > Slmax,j), (NJ-Sl,j)/Cl+1,j <(NK-Sl,k)/Cl+1,k par NJ<NK (associé à NJ=NK pour l'égalité).

Cette fonction d'arbitrage permet de tenir compte du besoin exprimé des interfaces et de la priorité. Ces valeurs Cl,i ne dépendent pas des allocations et sont annoncées, par la signalisation, au même titre que la déclaration des interfaces. Le procédé selon l'invention attribue toutes les allocations possibles même au-delà de la demande, ceci pour limiter les situations de blocage.

### Principe du procédé selon l'invention

Le procédé selon l'invention peut être résumé comme un échange logique entre interfaces. Une interface est par exemple matérialisée par sa station centrale dans une organisation 1-Cluster. Une allocation n'est pas allouée à une station mais à une interface. Pour mieux faire comprendre la solution on fera une description d'un point de vue interface, la matérialisation dans les stations étant un problème d'implémentation, dont on donnera ensuite un exemple.

De façon générale, les allocations peuvent être décrites de façon abstraite par un ensemble de NLOC classes disjointes, chaque classe comprenant au plus C allocations.

Chaque interface émet vers les interfaces indiquées en conflit dans le graphe de contraintes (conflits de première ou seconde espèce), le tableau NLOC*C (table d'allocations) qui la concerne. Le procédé suppose un échange plus ou moins cyclique des tables d'allocations. Chaque interface modifie alors sa table d'allocation et la ré-émet lorsqu'elle a reçu les tables d'allocations des interfaces en conflit ou sur « time out » Pratiquement, ces tables d'allocations seront transmises sur le canal de signalisation par la station centrale et relayées par une méthode comme celle décrite par la suite vers les autres stations centrales des interfaces en conflit. Ce point permet de considérer la solution comme locale, les échanges se faisant dans le voisinage de chaque station centrale.

### Allocation par interface

Une interface au vu des messages d'allocation reçus, va modifier ses allocations et ré-émettre les nouvelles allocations qu'elle s'attribue. Ces échanges successifs convergent en général vers une solution. Cette convergence est assurée par la fonction d'arbitrage et la façon de supprimer les conflits et de récupérer les allocations d'une interface à l'autre, c'est-à-dire les phases 1 et 3 de l'algorithme d'attribution.

Pour modifier ses allocations avant retransmission de sa table d'allocation, une interface J va localement dérouler un algorithme pouvant mettre en œuvre une ou plusieurs des trois phases décrites ci-après : à savoir les mécanismes de règlement des conflits, d'ajout et de récupération des allocations entre interfaces.

### Phase 1 : Elimination des allocations en conflit.

Cette phase est caractérisée par une décision basée sur la fonction d'arbitrage. Pour cela, une interface J regarde, pour chaque allocation qu'elle a inscrite dans sa table, si l'allocation est utilisée dans la table reçue d'une autre interface K qui est en conflit avec elle. En utilisant une fonction d'arbitrage, l'interface J décide de modifier ou de supprimer l'allocation, de sa table, si elle est utilisée par une interface gagnante. L'élimination se poursuit tant qu'il existe des allocations en conflit avec des interfaces K que la fonction d'arbitrage donne gagnantes (La fonction d'arbitrage est dépendante du nombre d'allocations, on l'évalue en supprimant l'allocation en conflit dans les deux interfaces). En cas d'égalité on utilise pour cette phase, l'adresse de station comme arbitrage complémentaire.

Si l'interface K gagnante est en conflit de première espèce, on supprime l'allocation dans J.

Si le conflit est de seconde espèce, au lieu de la suppression précédente, on peut essayer de garder la classe de l'allocation et changer l'allocation dans la classe, s'il existe une allocation de cette classe, supprimant tout conflit sur cette allocation ou ne présentant des conflits qu'avec des interfaces perdantes. Si cette allocation n'existe pas on supprime l'allocation initiale.

La table d'allocation de J est ainsi modifiée localement et c'est cette table qui est utilisée dans les étapes successives de l'algorithme. Comme la fonction d'arbitrage tend à donner J gagnant quand on supprime des allocations, il y a une limitation au nombre de suppressions par J. Les phases 2 et 3 suivantes peuvent ne pas être déroulées en cas de suppression.

**Phase 2 : Attribution d'allocations libres.**

L'interface J examine s'il existe des allocations libres, c'est à dire des allocations non annoncées par les interfaces K en conflit. L'interface J s'attribue alors ces allocations.

Dans cette phase 2, la fonction d'arbitrage n'intervient pas. En effet, une interface en conflit gagnante peut ne pas pouvoir s'attribuer ces allocations, qui resteraient alors non utilisées. Il est important de pouvoir allouer toutes les allocations pour limiter les blocages.

Pour limiter l'attribution simultanée d'allocations identiques par des interfaces en conflit, ce qui ralentirait le temps de convergence, on peut utiliser un paramètre de configuration pour restreindre le nombre d'allocations attribuées dans cette phase de l'algorithme, en limitant le nombre d'itérations de cette phase. Dans ce cas, le déroulement de la phase 3 n'est pas nécessaire, si la phase 2 a attribué le nombre d'allocations autorisé.

**Phase 3 : Phase de récupération.**

Une interface nouvellement créée va trouver toutes les allocations déjà attribuées. Il faut donc pouvoir les récupérer, ceci sous contrôle de la fonction d'arbitrage.

Cette phase est complémentaire de la phase 1, et la cohérence de ces deux phases permet la convergence. En effet, des allocations récupérées sont naturellement en conflit. La cohérence dans l'emploi de la fonction d'arbitrage entre les phases 1 et 3, conduit à ce que (du moins s'il n'y a pas d'autres changements dans les allocations), une station ayant décidé de récupérer une allocation en fonction des règles de la phase 3 et donc de se l'attribuer, la station qui avait l'allocation soit conduite à la supprimer de sa table en fonction des règles de la phase 1. Si une interface ne possédant pas une allocation, est gagnante ou est à égalité par la fonction d'arbitrage, vis-à-vis de toutes les autres interfaces en conflit possédant cette allocation (la fonction d'arbitrage étant évaluée en ajoutant l'allocation dans l'interface et en la supprimant dans les interfaces en conflit), elle s'attribue cette allocation, créant ainsi un conflit qui sera résolu lorsque les autres interfaces vont dérouler la phase 1. Pour être plus précis, on devra vérifier la condition d'arbitrage pour toutes les interfaces en conflit de première espèce, ce qui conduit à sélectionner des classes d'allocations « récupérables ». Pour les conflits de seconde espèce, on vérifie dans les classes »récupérables » qu'il existe une allocation, où les interfaces qui utilisent cette allocation, sont perdantes au vu de la fonction d'arbitrage. Une politique plus stricte est d'interdire la récupération, si une interface en conflit de seconde espèce, utilise l'allocation, ceci de façon indépendante de la fonction d'arbitrage.

Comme pour la phase 2, un paramètre peut être utilisé pour limiter le nombre d'itérations lors de cette phase de l'algorithme et pour accélérer la convergence.

Dans cette phase, une allocation récupérée, est inscrite dans la table de J. Elle est supprimée provisoirement des tables des autres interfaces en conflit sur cette allocation. Ceci conduit à rendre gagnante pour la fonction d'arbitrage les interfaces où les allocations sont potentiellement supprimées et perdantes l'interface J, limitant ainsi naturellement le nombre de récupérations.

**Utilisation d'une notion de famille d'allocation dans les phases précédentes.**

Selon un mode de réalisation, il est possible d'intégrer un mécanisme optionnel qui permet dans les phases 1, 2 ou 3, une suppression, un ajout ou une récupération décidés, de tenter de supprimer, d'ajouter ou de récupérer une famille d'allocation liée à cette allocation. Ce mécanisme permet d'accélérer les convergences en agissant par ce biais sur plusieurs allocations.

Pour cela, chaque interface J examine les allocations de sa table à partir d'une allocation de départ qui lui est propre (par configuration ou déterminé aléatoirement mais fixé).

Si l'interface J s'attribue / ou récupère une allocation K, elle va chercher immédiatement avant d'examiner d'autres allocations, à s'attribuer / ou à récupérer les allocations K+n* DNSj, où DNSj est un paramètre propre à la station J (pouvant être fixé par configuration, ou dynamiquement défini comme indiqué par la suite dans un exemple de solution détaillée). Si J décide une action sur l'allocation A elle va essayer la même action sur A + DNSj, s'attribuant ainsi les allocations par famille répartie, par exemple si l'interface s'attribue l'allocation 1 et si DNSj =4, l'interface regarde prioritairement si elle peut s'attribuer l'allocation 5, 9, 13.... avant de regarder l'allocation 2. Pour chacune de ces allocations potentielles, on vérifie les critères de la phase 2 ou 3.

Le but est, dans le cadre où les allocations sont par exemple de type temps fréquence, de traiter plusieurs créneaux temporels et d'avoir à traiter non pas NSLOT allocations une par une, mais DNSj, ce qui permet une diminution significative des temps de convergence. Pour des raisons de cohérence ce mécanisme intervient également en phase 1, où l'on va supprimer, si nécessaire, les conflits sur les allocations K+n*DNSJ si la suppression de K a été décidée. On tient compte normalement pour ces suppressions de la fonction d'arbitrage. Cependant, pour accélérer la convergence quand le pourcentage d'allocation en conflit est élevé, on peut ne pas tenir compte de la fonction d'arbitrage pour ces allocations, ce qui peut conduire à plus de suppressions qu'il est nécessaire, mais récupérées par la suite.

**Exemple de mise en œuvre de l'algorithme d'attribution**

Ce paragraphe décrit de façon détaillée une mise en œuvre possible des étapes et des phases détaillées précédemment.

Les données d'entrée sont NSLOT (nombre de créneaux temporels à allouer), C (nombre de canaux), les différentes tables d'allocation (TK pour l'interface K).

L'algorithme est déroulé par chaque interface Ji pour modifier sa table après réception des tables des interfaces Tji en conflit définies par le graphe de contraintes.

A l'interface J0 sont associés le paramètre DNSJ0 qui détermine un pseudo cycle d'examen des allocations (famille d'allocation), et le paramètre INDJ0. Ce dernier paramètre détermine la première allocation examinée dans l'algorithme pour J0. Ces deux paramètres (différents ou non d'une interface à l'autre) peuvent être fixés par configuration pour un système donné (par exemple DNSJ0=NSLOT/10, INDJ0 =1). On peut aussi choisir dynamiquement si NCONF= 1+ nombre d'interface en conflit de première espèce avec J0, DNSJ0 = NCONF (si DNSJ0> NSLOT/10) et INDJ0= aléatoire entre 1 et NCONF (mais fixé tant que NCONF ne change pas). Ces valeurs sont données à titre indicatif mais ne sont pas très critiques.

Un autre paramètre contrôle l'algorithme Valeur et limite le nombre d'itérations des phases 2 et 3.
Par défaut Valeur=1
On note F(J0)> F(K) si l'interface J0 gagne sur l'interface K par la fonction d'arbitrage et F(J0)= F(K) si égalité.
J0 et K sont des nombres identifiant les interfaces, et différents d'une interface à l'autre.
L'algorithme est déroulé pour J0, avant transmission de sa table d'allocations TJO. On note « s,ci » une allocation sur le créneau temporel « s » et le canal « ci ».

## Phase 1

Conflit de première espèce :

   s= INDJ0, première allocation temporelle examinée
   A- Pour chaque interface K en conflit de première espèce avec J0

Si s appartient à J0 et s appartient à K avec F(K)> F(J0) ou F(K)=F(J0) et K>J0
(F étant évalué en supprimant une allocation dans J0 et K)
alors
Supprimer s de la table de J0.
Faire s= s+1 et retourner en A si on n'a pas parcouru toutes les allocations.
Remarque : La table TJ0 utilisée à chaque itération de A est la table actualisée par les suppressions. Donc F(J0) augmente (tend à devenir gagnante) à chaque suppression, et donc limite le nombre de suppressions.
Conflit de seconde espèce (la table TJ0 est la table actualisée).

Le procédé est identique au procédé précédent. La différence est qu'au lieu d'une suppression on peut changer le canal. On pourra utiliser deux types de méthodes selon le nombre C de canaux disponibles. Si C est faible (2 à 3), en cas de conflit, on supprime l'allocation (donc identique à la procédure précédente). Sinon on essaye de changer le canal en recherchant un canal ci libre sur l'allocation temporelle s (ou s'), c'est-à-dire que l'allocation s,ci n'est utilisée par aucune interface en conflit (ou autre variante par des allocations perdantes par la fonction d'arbitrage). Si ce n'est pas possible on supprime l'allocation.

Lorsqu'une allocation est supprimée (en première ou deuxième espèce), on applique immédiatement après sa suppression et avant d'examiner les allocations s+1 la suppression/ de la famille d'allocation s'=s+n*DNSJ0. Parcourir toutes les allocations s'=s+n*DNSJ0 (modulo NSLOT) (avec n<=NSLOT/DNSJO) et supprimer/ modifier s', comme pour s.

Si le pourcentage de créneaux en conflit est élevé, on peut supprimer s', si s' est en conflit avec K, sans vérification de la fonction d'arbitrage.
On pose val= Valeur
Si des allocations ont été supprimées en phase 1 on n'exécute pas les phases deux et trois (option).

## Phase 2

s= INDJ0
B- On vérifie que s,ci est allouable. Pour que s,ci soit allouable, il faut que s ne soit utilisé par aucune interface en conflit de première espèce et qu'il existe un canal ci tel que s, ci soit une allocation qui n'est utilisée par aucune interface en conflit de seconde espèce. S doit être libre en J0.

Si s,ci est allouable, inscrire l'allocation dans TJ0. Faire Val=Val-1 Parcourir toutes les allocations s'=s+n*DNSJ0 (modulo NSLOT) (avec n<=NSLOT/DNSJO) et allouer s',ck si cette allocation est allouable. Faire Val =Val-1 à chaque allocation attribuée.

Retourner en B avec s=s+1 et tant que tous les créneaux s n'ont pas été parcourus et Val >0.

## Phase 3

Si Val>0 on applique la phase 3
s= INDJ0
C- On vérifie que s,ci est récupérable.
On dit que s,ci est récupérable si :

   s n'est pas dans les allocations de J0

   si s est utilisée par une interface K en conflit de première espèce, alors F(J0)>=F(K), F étant évaluée en ajoutant une allocation dans J0 et en en supprimant une dans K.

s,ci n'est utilisée par aucune interface en conflit de seconde espèce (cas où le nombre de canaux est faible)
Si s est récupérable, ajouter s dans TJ0 et faire Val=Val-1. Parcourir toutes les allocations s'=s+n*DNSJ0 (modulo NSLOT) (avec n<=NSLOT/DNSJO) et allouer s',ck si cette allocation est récupérable. Faire Val =Val-1 à chaque allocation attribuée.

Pour chaque allocation récupérée, l'ajouter dans TJ0, et les supprimer fictivement dans les tables Tk en cas de conflit.

Retourner en C avec s=s+1 et tant que tous les créneaux s n'ont pas été parcourus et Val >0.

Pendant le déroulement de l'algorithme, et tant qu'il n'y a pas convergence, il est possible d'utiliser les allocations en conflit, en utilisant une technique de type HAMA (Lichun Bao et J.J. Garcia-Luna-Aceves).

Il est à noter que si une allocation n'est plus utilisée par une interface, et que cette information n'est pas connue, les techniques HAMA ne vont pas créer de conflit. Par contre, si une interface s'attribue une nouvelle allocation, elle devra vérifier que l'information est connue avant de participer à la compétition HAMA.

### Exemple de méthode d'échange et de mise en oeuvre

On décrit ici un exemple d'échange de signalisation, pour une mise en œuvre de la solution proposée. On suppose qu'il existe un canal de signalisation permettant à chaque station de diffuser à ses voisines radioélectriques des données de signalisation.

On suppose que chaque station qui est station centrale d'une interface au moins, constitue un message de signalisation. Ce message indique, pour chaque interface où la station considérée est station centrale, les allocations de cette interface, sous forme d'un tableau NSLOT*C, avec 1 ou 0 si l'interface est utilisée ou non. Notons qu'à chaque interface est associé un tel tableau, (et non associé à la station centrale).

Chaque interface peut être identifiée uniquement par l'adresse de la station centrale et un numéro attribué par cette dernière.

On considère ici que les échanges sont constitués de cet unique message. Bien évidemment, pour économiser la bande passante, on pourra utiliser des messages procédant par transmission de différences, plutôt que de transmettre la totalité des données de toutes les interfaces. Lorsqu'une interface n'est plus modifiée, on peut se limiter à la transmission d'une signature. Dans ce cas, il est nécessaire de prévoir des mécanismes de demande de transmission des données d'une interface, en cas d'incohérences. Il est aussi possible pour une station de créer un message que pour une partie, voire une seule des interfaces où elle est station centrale. Ces messages sont appelés messages d'allocation, à distinguer d'autres messages, non considérés ici, qui sont, par exemple, les messages de déclaration évoqués précédemment.

Une station centrale dresse, en utilisant les messages de déclaration des interfaces, la liste L0 des interfaces en conflit. Elle élimine de L0 les interfaces dont elle est station centrale et celles dont la station centrale est une voisine, constituant ainsi la liste L1.

Lorsque la station centrale émet le message d'allocation, celui-ci est reçu des stations subordonnées dans l'interface et par les stations centrales voisines. Seules donc les stations centrales de la liste L1 ne reçoivent pas directement ce message.

On suppose que chaque station connaît la liste des voisins et des voisins de voisins.

La station centrale constitue la liste A des stations voisines qui participent à une interface de la liste L1 ou sont voisines d'une station participant à la liste L1.

Soit B la liste des voisins de A, qui ne sont pas voisins de la station centrale.

La liste des relais désignés par la station centrale est un sous-ensemble C de A, tel que toute station de B est voisine au moins d'une station de C. La liste L1 est transmise à ces relais.

Le message émis par une station centrale comprend un indicatif de relayage avec la valeur 0.

Une station qui reçoit un message d'allocation avec un indicatif de relayage 0 d'une station centrale SC1, relaie le message si elle a été désignée comme station relais par SC1 et si le message concerne une interface de L1. Le message relayé est marqué avec indicatif de relayage 1.

Une station qui a été désignée relais par une station centrale SC2 et reçoit un message avec indicatif de relayage 1 dont l'origine n'est pas SC2, mais une station centrale SC1 qui ne l'a pas désigné comme relais, retransmet le message dans les conditions suivantes : Le message concerne une interface de la liste L1 donnée par SC2 SC2 n'a pas de stations voisines participant à l'interface concernée par l'allocation.

Dans ces conditions, un message d'allocation d'une station centrale, parvient à toute station centrale d'une interface en conflit.

L'algorithme précédemment est exécuté par chaque station centrale pour les interfaces qui la concerne.

### Revendications

1. Procédé distribué pour attribuer de manière dynamique, à des groupes de stations désignés « interfaces » comprenant au moins deux stations, lesdites stations comportant un émetteur/récepteur et communiquant entre elles grâce à des capacités de signalisation, des ressources temps/fréquence organisées en classes disjointes, une classe comportant C allocations, chaque groupe de stations comprenant une table d'allocation Tsi, chaque groupe de stations échange au moyen d'un protocole de signalisation cette table d'allocation Tsi avec les groupes de stations qui sont définis comme étant en conflit avec ledit groupe par un graphe de contraintes, un graphe de contrainte entre les groupes indiquant pour un groupe de stations A donné, les groupes de stations qui ne peuvent avoir des allocations comprises dans une même classe que les allocations dudit groupe A, conflit de première espèce entre groupes, et les groupes de stations qui ne sont pas en conflit de première espèce avec ledit groupe A mais qui, s'ils utilisent des allocations comprises dans une même classe que la classe du groupe A doivent utiliser dans cette classe des allocations différentes des allocations utilisées par ledit groupe A, conflit de seconde espèce entre groupes, le procédé utilisant une fonction d'arbitrage pour régler les conflits et les attributions des allocations entre les groupes en conflit selon le graphe de contrainte, **caractérisé en ce qu'**il comporte au moins les étapes suivantes :

• chaque interface Ji émet vers les interfaces K indiquées en conflit dans le graphe de contrainte, le tableau d'allocations TJi qui lui est associé,
• une interface Ji regarde pour chaque allocation AJi qu'elle a inscrit dans son tableau TJi si l'allocation AJi est utilisée dans la table reçue d'une interface K qui est en conflit,
• l'interface Ji utilise la fonction d'arbitrage pour modifier l'allocation AJi dans le tableau TJi, et **en ce que** :
• si une allocation est utilisée selon les tables d'allocation par une interface K et une interface J, et si J constate que l'interface K est gagnante selon la fonction d'arbitrage, en supprimant dans les deux tables l'allocation, et si le conflit est de première espèce, alors J supprime l'allocation Aji dans le tableau d'allocations de l'interface J.
• si une allocation est utilisée selon les tables d'allocation par une interface K et une interface J, et si J constate que l'interface K est gagnante selon la fonction d'arbitrage, en supprimant dans les deux tables l'allocation et si le conflit est de seconde espèce, alors on conserve la classe de l'allocation AJi dans le tableau TJi et l'on change l'allocation dans la classe, s'il existe une allocation dans cette classe sans conflit de seconde espèce, sinon on supprime cette allocation.

2. Procédé selon la revendication 1, **caractérisé en ce que** l'interface J examine s'il existe des allocations libres Ai non annoncées par les interfaces en conflit et elle s'attribue ses allocations.

3. Procédé selon l'une des revendications 1 à 2, **caractérisé en ce que** si, une interface J détermine une allocation An qu'elle n'utilise pas et que J évalue selon la fonction d'arbitrage qu'elle est gagnante vis-à-vis de toute interface en conflit utilisant cette allocation, en ajoutant l'interface dans sa table et en la supprimant dans les tables des interfaces en conflit, l'interface gagnante ou l'interface à égalité par la fonction d'arbitrage vis-à-vis de toutes les autres interfaces en conflit possédant cette allocation s'attribue l'allocation An.

4. Procédé selon l'une des revendications 2 ou 3 **caractérisé en ce que** le nombre d'allocations ajoutées ou récupérées est limité par un paramètre.

5. Procédé selon l'une des revendications 1 à 4, **caractérisé en ce que** l'on utilise une famille d'allocations comprenant les étapes suivantes : si l'interface J s'attribue, récupère ou supprime une allocation, elle cherche avant d'examiner d'autres allocations à s'attribuer, à récupérer, ou à supprimer les allocations K+n*DNSj où NDSj est un paramètre de l'interface J, K est une allocation récupérée par l'interface J.

6. Procédé selon la revendication 1, **caractérisé en ce que** l'on utilise une fonction d'arbitrage définie de la manière suivante : une interface étant **caractérisée par** une demande de type C1j, C2j, Cmj, où Cmj représente un nombre d'allocation demandée par l'interface J avec la priorité m, les priorités les plus fortes étant d'indice le plus faible, on pose $SL,$

$$j = \sum_{i=1}^{i=L} Ci,$$

$j$ et Lmax la plus petite des priorités considérées, avec L l'indice correspondant à la priorité et J gagne sur K, NJ étant le nombre d'allocations de J et NK le nombre d'allocations de K si :

Soit on a SI,j<NJ<=SI+1,j et Sh,k< NK<= Sh+1, k et k >I ou NK > SImax,k
Soit on a (SI,j<NJ<=SI+1,j et SI,k <NK<= SI+1, k) ou (NK > SImax,k et NJ > SImax,j) et (NJ-SI, j)/CI+1,j <(NK-SI,k)/CI+1,k .

Si on a (NJ-SI,j)/CI+1,j =(NK-SI,k)/CI+1,k il y a égalité.

7. Procédé selon l'une des revendications 1 à 6, **caractérisé en ce que** les ressources sont des ressources temps fréquences.

8. Procédé selon l'une des revendications 1 à 6, **caractérisé en ce que** le groupe de stations forme un ensemble radio électriquement connexe et le graphe de contrainte est déterminé par le voisinage radio électrique des stations de chaque groupe et des caractéristiques de transmission potentielle associés aux stations des groupes.

9. Procédé selon l'une des revendications 1 à 8, **caractérisé en ce que** le réseau est un réseau Ad Hoc.

**Patentansprüche**

1. Verteiltes Verfahren zur dynamischen Zuteilung, an Gruppen von Stationen, bezeichnet als "Schnittstellen", beinhaltend mindestens zwei Stationen, wobei die Stationen einen Sender/Empfänger beinhalten und untereinander dank Signalisierungskapazitäten miteinander kommunizieren, von Zeit-/Frequenzressourcen, organisiert in überlappungslosen Klassen, wobei eine Klasse C Allokationen beinhaltet, wobei jede Gruppe von Stationen eine Allokationstabelle Tsi beinhaltet, jede Gruppe von Stationen mithilfe eines Signalisierungsprotokolls diese Allokationstabelle Tsi mit denjenigen Gruppen von Stationen austauscht, welche durch eine Spannungsgrafik als in Konflikt mit der Gruppe stehend definiert sind, wobei eine Spannungsgrafik zwischen den Gruppen für eine gegebene Gruppe von Stationen A diejenigen Gruppen von Stationen angibt, die keine Allokationen besitzen können, welche in einer gleichen Klasse wie die Allokationen der Gruppe A enthalten sind, Konflikt der ersten Art zwischen Gruppen, und diejenigen Gruppen von Stationen, die nicht in Konflikt der ersten Art mit der Gruppe A stehen, sondern die, wenn sie Allokationen verwenden, die in einer gleichen Klasse enthalten sind wie der Klasse der Gruppe A, in dieser Klasse andere Allokationen als diejenigen verwenden sollen, welche durch die Gruppe A verwendet werden, Konflikt der zweiten Art zwischen Gruppen, wobei das Verfahren eine Arbitrierungsfunktion verwendet, um die Konflikte und die Zuteilungen der Allokationen zwischen den in Konflikt stehenden Gruppen entsprechend der Spannungsgrafik zu regeln, **dadurch gekennzeichnet, dass** es mindestens die folgenden Schritte beinhaltet:

   • jede Schnittstelle Ji sendet an die Schnittstellen K, welche als in Konflikt stehend in der Spannungsgrafik angegeben sind, die Allokationstabelle TJi, die ihr zugeordnet ist,
   • eine Schnittstelle Ji prüft für jede Allokation AJi, die sie in ihre Tabelle TJi eingetragen hat, ob die Allokation AJi in der von einer in Konflikt stehenden Schnittstelle K empfangenen Tabelle verwendet wird,
   • die Schnittstelle Ji verwendet die Arbitrierungsfunktion zum Ändern der Allokation AJi in der Tabelle TJi, und dadurch, dass:
   • wenn eine Allokation entsprechend den Allokationstabellen durch eine Schnittstelle K und eine Schnittstelle J verwendet wird, und wenn J feststellt, dass die Schnittstelle K gemäß der Arbitrierungsfunktion obsiegt, durch Löschen in beiden Tabellen und wenn der Konflikt der ersten Art ist, dann löscht J die Allokation Aji in der Allokationstabelle der Schnittstelle J.
   • wenn eine Allokation gemäß den Allokationstabellen durch eine Schnittstelle K und eine Schnittstelle J verwendet wird, und wenn J feststellt, dass die Schnittstelle K gemäß der Arbitrierungsfunktion obsiegt, durch Löschen in beiden Tabellen und wenn der Konflikt der zweiten Art ist, dann wird die Klasse der Allokation AJi in der Tabelle TJi beibehalten und man ändert die Allokation in der Klasse, wenn in dieser Klasse eine Allokation ohne Konflikt der zweiten Art vorhanden ist, ansonsten wird diese Allokation gelöscht.

2. Verfahren nach Anspruch 1, **dadurch gekennzeichnet, dass** die Schnittstelle J untersucht, ob freie Allokationen Ai vorhanden sind, die nicht durch die in Konflikt stehenden Schnittstellen benannt sind, und sich ihre Allokationen zuweist.

3. Verfahren nach einem der Ansprüche 1 bis 2, **dadurch gekennzeichnet, dass**, wenn eine Schnittstelle J eine Allokation An bestimmt, welche sie nicht verwendet, und J gemäß der Arbitrierungsfunktion bewertet, dass sie gegenüber allen in Konflikt stehenden Schnittstellen, welche diese Allokation verwenden, obsiegt, indem sie die Schnittstelle in ihrer Tabelle hinzufügt und diese in den Tabellen der in Konflikt stehenden Schnittstellen löscht, sich die gemäß der Arbitrierungsfunktion in Bezug auf alle anderen in Konflikt stehenden Schnittstellen, welche diese Allokation besitzen, obsiegende oder im Gleichstand stehende Schnittstelle die Allokation An zuweist.

4. Verfahren nach einem der Ansprüche 2 oder 3, **dadurch gekennzeichnet, dass** die Anzahl der hinzugefügten oder zurückgewonnenen Allokationen durch einen Parameter begrenzt ist.

5. Verfahren nach einem der Ansprüche 1 bis 4, **dadurch gekennzeichnet, dass** man eine Familie von Allokationen verwendet, folgende Schritte beinhaltend: wenn die Schnittstelle J sich eine Allokation zuweist, diese zurückgewinnt oder löscht, versucht sie, bevor sie andere Allokationen untersucht, sich die Allokationen K+n*DNSj zuzuweisen, zurückzugewinnen oder zu löschen, wobei NDSj ein Parameter der Schnittstelle J ist, K eine durch die Schnittstelle J zurückgewonnene Allokation ist.

6. Verfahren nach Anspruch 1, **dadurch gekennzeichnet, dass** man eine wie folgt definierte Arbitrierungsfunktion verwendet: wobei eine Schnittstelle durch eine Anforderung vom Typ C1j, C2j, Cmj gekennzeichnet ist, wobei Cmj eine durch die Schnittstelle J angeforderte Allokationsanzahl mit der Priorität m ist, wobei die höchsten Prioritäten den geringsten Index aufweisen,

wobei man die Gleichung SL, $j = \sum_{i=1}^{i=L} Ci,$ _j,_ aufstellt und

wobei Lmax die kleinste der betrachteten Prioritäten ist, wobei L der Index ist, welcher der Priorität entspricht und J über K obsiegt, wobei NJ die Anzahl der Allokationen von J ist und NK die Anzahl der Allokationen von K ist, wenn:

man entweder folgende Gleichung hat: SI, j<NJ<=SI+I,j und Sh,k < NK<= Sh+1,k und k >1 oder NK > SImax,k

oder man folgende Gleichung hat: (SI, j<NJ<=S1+1,j und SI,k <NK<= S1+1,k) oder (NK > SImax,k und NJ > SImax,j) und (NJ-SI,j)/CI+1, j <(NK-SI,k)/CI+1,k.

Wenn man folgende Gleichung hat: (NJ-SI,j)/CI+1,j = (NK-SI,k)/C1+1,k, liegt Gleichstand vor.

7. Verfahren nach einem der Ansprüche 1 bis 6, **dadurch gekennzeichnet, dass** die Ressourcen Zeit-/Frequenzressourcen sind.

8. Verfahren nach einem der Ansprüche 1 bis 6, **dadurch gekennzeichnet, dass** die Gruppe von Stationen eine elektrisch verbundene Funkanordnung bildet, und die Spannungsgrafik durch die radioelektrische Nachbarschaft der Stationen einer jeden Gruppe und durch den Stationen der Gruppen zugeordnete potentielle Übertragungsmerkmale bestimmt wird.

9. Verfahren nach einem der Ansprüche 1 bis 8, **dadurch gekennzeichnet, dass** das Netzwerk ein ad hoc-Netzwerk ist.

## Claims

1. A distributed method for dynamically assigning time/frequency resources organized in disjoint classes to station groups named "interfaces" comprising at least two stations, said stations comprising a transmitter/receiver and communicating with each other by means of signaling capacities, one class comprising C allocations, each group of stations comprising an allocation table Tsi, each group of stations exchanges this allocation table Tsi by means of a signaling protocol with the groups of stations that are defined as being in conflict with said group by a constraints graph, a graph of constraints between the groups indicating for a given group of stations A the groups of stations that may not have allocations of a same class as the allocations of said group A, first kind conflict between groups, and the groups of stations that are not in the first kind conflict with said group A but which, if they use allocations from a same class as the class of group A, must use different allocations in this class to the allocations used by said group A, second kind conflict between groups, the method using an arbitration function to settle the conflicts and the assignments of the allocations between the groups in conflict according to the constraints graph, **characterized in that** it comprises at least the following steps:

• each interface Ji transmits the allocation table TJi associated with it to the interfaces K indicated as being in conflict in the constraints graph,
• an interface Ji looks, for each allocation AJi that it has entered in its table TJi, whether the allocation AJi is used in the table received from an interface K that is in conflict,
• the interface Ji uses the arbitration function to modify the allocation AJi in the table TJi, and **in that**:
• if an allocation is used according to the allocation tables by an interface K and an interface J, and if J observes that the interface K is winning according to the arbitration function, by deletion in the two allocation tables, and if the conflict is of the first kind, then J deletes the allocation Aji in the allocation table of the interface J.
• if an allocation is used according to the allocation tables by an interface K and an interface J, and if J observes that the interface K is winning according to the arbitration function, by deletion in the two allocation tables, and if the conflict is of the second kind, then the class of the allocation AJi is preserved in the table TJi and the allocation in the class is changed, if there is an allocation in this class without the second kind conflict, otherwise this allocation is deleted.

2. The method according to claim 1, **characterized in that** the interface J examines whether there are free allocations Ai not announced by the interfaces in conflict and assigns itself its allocations.

3. The method according to one of claims 1 to 2, **characterized in that** if, an interface J determines an allocation An that it is not using and which J evaluates according to the arbitration function to be winning over every interface in conflict using this allocation, by adding the interface into its table and by deleting it in the tables of the interfaces in conflict, the winning interface or the equality interface by the arbitration function over every other interface in conflict having this allocation assigns the allocation An to itself.

4. The method according to one of claims 2 or 3, **characterized in that** the number of allocations added or recovered is limited by a parameter.

**5.** The method according to one of claims 1 to 4, **characterized in that** a family of allocations is used comprising the following steps: if the interface J assigns itself, recovers or deletes an allocation, it tries, before examining other allocations, to assign itself, recover or delete the allocations K+n*DNSj where NDSj is a parameter of the interface J, K is an allocation recovered by the interface J.

**6.** The method according to claim 1, **characterized in that** an arbitration function defined in the following manner is used: an interface being **characterized by** a request of the type C1j, C2j, Cmj, where Cmj represents an allocation number requested by the interface J with the priority m, the highest priorities being the lowest indices,

set SL, $j = \sum_{i=1}^{i=L} Ci,_j$ and

Lmax the smallest of the priorities considered, with L the index corresponding to the priority and J wins over K, NJ being the number of allocations of J and NK the number of allocations of K, if:

either Sl,j<NJ<=Sl+1,j and Sh,k< NK<= Sh+1,k and k >1 or NK > Slmax,k
or (Sl,j<NJ<=Sl+1,j and Sl,k <NK<= Sl+1,k) or (NK > Slmax,k and NJ > Slmax,j) and (NJ-Sl, j)/Cl+1,j <(NK-Sl,k)/Cl+1,k .

If (NJ-Sl,j)/Cl+1,j =(NK-Sl,k)/Cl+1,k there is equality.

**7.** The method according to one of claims 1 to 6, **characterized in that** the resources are time-frequency resources.

**8.** The method according to one of claims 1 to 6, **characterized in that** the group of stations forms a radio-connected set and the constraints graph is determined by the radio-electronic environment of the stations of each group and by potential transmission characteristics associated with the stations of the groups.

**9.** The method according to one of claims 1 to 8, **characterized in that** the network is an ad hoc network.

S₁

Sₙ

FIG.1

Canaux

Cycle

Canal C

Temps

Créneau K

FIG.2

Canaux

Cycle

Temps

Réservé
signalisation

FIG.3

Interface C Interface B

Interface A

Deux clusters (A,B)
(toutes stations E/R)
Un lien bidirectif (C)

A

C

B

# FIG.4

Canaux

Cycle

Allocation
des flux

Temps

Interface F1 de A vers B point à point

Interface F2 de D vers E point à point

Interface F3 «broadcast» de C

Interface F4 de A vers G

A    B

D

C    E

## FIG.5

J gagnant

NK

J      J      J

J    J                    K

J                  K      K

K      K      K

NJ

## FIG.6

## RÉFÉRENCES CITÉES DANS LA DESCRIPTION

**Documents brevets cités dans la description**

- US 20020167960 A

**Littérature non-brevet citée dans la description**

- A self reorganizing slot allocation protocol for multi cluster sensor networks. **TAO WU.** SUBIR BISWAS. IEEE, 2005
- **LICHUN BAO ; J.J. GARCIA-LUNA-ACEVES.** Channel Access Scheduling for Ad-Hoc Networks. *Journal of Parallel and Distributed Computing, Special Issue on Wireless and Mobile Ad Hoc Networking and Computing,* 2002
- **M GERLA ; C.R LIN.** Adaptative clustering for mobile Wireless networks. *IEEE Commun.,* Septembre 1997
- **J. GRÖNKVIST.** Distributed STDMA in Ad hoc network » et « Interference-Based Scheduling in Spatial Reuse TDMA. *J. Grönkvist Doctoral Thesis Stockholm,* 2005